# EUROPÄISCHE PATENTSCHRIFT

(11) **EP 2 492 172 B1**
(45) Veröffentlichungstag und Bekanntmachung des Hinweises auf die Patenterteilung: **28.09.2016**
(21) Anmeldenummer: 12001078.0
(22) Anmeldetag: 18.02.2012
(51) Int. Cl.: B62D 25/02, B62D 25/20, B62D 21/15

(54) **Anordnung eines Schwellers an einer Bodenstruktur eines Fahrzeugs**
Fixing a sill to a floor structure of a vehicle
Agencement d'un seuil sur une structure de plancher d'un véhicule

(30) Priorität: 25.02.2011 DE 102011012390
(43) Veröffentlichungstag der Anmeldung: 29.08.2012
(73) Patentinhaber: AUDI AG, 85045 Ingolstadt (DE)
(72) Erfinder: Berthel, Marc, 01728 Goppeln (DE)
(74) Vertreter: Patzelt, Heike Anna Maria

(56) Entgegenhaltungen:
- EP-A2- 1 081 025
- DE-A1-102005 016 492
- US-A- 5 549 349
- US-B1- 6 676 200

## Beschreibung

Die Erfindung betrifft eine Anordnung eines Schwellers an einer Bodenstruktur eines Fahrzeugs gemäß dem Oberbegriff des Patentanspruchs 1.

Bei einem Seitenaufprall auf ein Fahrzeug wird ein Schweller von der Crashkraft beaufschlagt und leitet die Aufprallenergie in eine Bodenstruktur des Fahrzeugs weiter. Insbesondere bei Bodenstrukturen, welche zur Gewährleistung einer ausreichend großen Crashsicherheit der Fahrzeugkarosserie besonders fest und steif ausgebildet sind, wie beispielsweise Bodenstrukturen aus Faserverbundwerkstoffen, kann die in die Bodenstruktur eingeleitete Aufprallenergie zu einem Bruch der Bodenstruktur und damit zu einer Gefährdung der Insassen innerhalb der Fahrgastzelle des Fahrzeugs führen.

Aus der DE 199 01 070 C1 ist eine Anordnung eines Türschwellers an einer als Bodenblech ausgeführten Bodenstruktur eines Fahrzeugs bekannt. Der Türschweller ist nahezu über seine gesamte Länge durch eine Schweißverbindung mit dem Bodenblech verbunden, welche zwischen einem Schweißflansch an einer Längsseite des Türschwellers und einer seitlich daneben verlaufenden Randzone des Bodenblechs vorgesehen ist. Die Schweißverbindung umfasst über die Länge des Türschwellers mindestens eine Schweißpunktreihe. Hierbei ist die Stoßfuge zwischen dem Schweißflansch des Türschwellers und der gegenüberliegenden Randzone des Bodenblechs im hinteren Längenbereich durch ein quer zu dieser verlaufendes Zugband überbrückt, wobei das Zugband mit einem Ende am Türschweller und mit dem anderen Ende am benachbarten Bereich des Bodenblechs festgelegt ist.

Aus der EP 1 081 025 A2 ist eine Fahrzeugbodenstruktur bekannt, welche einen Bodenkörper, der in seiner Längsrichtung einen einheitlichen Querschnitt aufweist, einen Armaturenbrettquerträger, der mit einem vorderen Ende des Bodenkörpers verbunden ist, um ein Rahmenelement der Bodenstruktur zu bilden, einen hinteren Querträger, der mit einem hinteren Ende des Bodenkörpers verbunden ist, um ein weiteres Rahmenelement der Bodenstruktur zu bilden, einen Seitenschweller, der mit einer Seite des Bodenkörpers verbunden ist, und eine Säule, deren unteres Ende mit dem Seitenschweller verbunden ist, wobei die Säule relativ zur Längsmitte des Bodenkörpers nach hinten versetzt angeordnet ist. Zudem weist der Bodenkörper und/oder der Seitenschweller ein seitliches Verstärkungselement auf, welches im Seitenbereich der Bodenstruktur auf gleicher Höhe mit der Längsmitte des Bodenkörpers angeordnet ist. Das Verstärkungselement erhöht bei einem Seitenaufprall die an der Längsmitte erzeugte Reaktionskraft relativ im Vergleich zu der am unteren Ende der Säule erzeugten Reaktionskraft, um die Festigkeit der Bodenstruktur im Bereich der Längsmitte des Bodenkörpers bzw. des Verstärkungselements im Vergleich mit dem Anbindungsbereich der Säule zu erhöhen.

Die Aufgabe der Erfindung ist es, eine Anordnung eines Schwellers an einer Bodenstruktur eines Fahrzeugs zu schaffen, welche bei einfachem und kostengünstigem Aufbau eine Verbesserung des Seitenaufprallschutzes des Fahrzeugs gewährleistet.

Erfindungsgemäß wird die Aufgabe durch Bereitstellung einer Anordnung eines Schwellers an einer Bodenstruktur eines Fahrzeugs mit den Merkmalen des Patentanspruchs 1 gelöst. Vorteilhafte Ausführungsformen und Weiterbildungen der Erfindung sind in den abhängigen Ansprüchen angegeben.

Um eine Anordnung eines Schwellers an einer Bodenstruktur eines Fahrzeugs zu schaffen, welche bei einfachem und kostengünstigem Aufbau eine Verbesserung des Seitenaufprallschutzes des Fahrzeugs gewährleistet, wird erfindungsgemäß vorgeschlagen, dass der Schweller über ein Krafteinleitungsmodul mit der Bodenstruktur in Wirkverbindung steht, welches die Aufprallenergie gezielt in der Bodenstruktur abbaut. Ein wesentlicher Vorteil der Erfindung besteht darin, dass die Bodenstruktur des Fahrzeugs bei einfachem und kostengünstigem Aufbau selbst zur Abstützung des Schwellers über ein Krafteinleitungsmodul gezielt beansprucht und definiert verformt und damit der Seitenaufprallschutz des Fahrzeugs wesentlich verbessert werden kann. Durch eine gesteuerte Einleitung von Kräften in die Bodenstruktur des Fahrzeugs und eine gezielte Verteilung der auftretenden Aufprallenergie in das Fahrzeug erfolgt ein kontrolliertes Versagen der Bodenstruktur. Auf diese Art kann die eingeleitete Aufprallenergie gezielt durch die Biegesteifigkeit der Bodenstruktur und durch das Krafteinleitungsmodul gesteuert werden, wodurch ein Versagen der Bodenstruktur an einer anderen Stelle vermieden und die restliche Tragstruktur des Fahrzeugs, wie beispielsweise Anbindungsknoten des Schwellers, entlastet wird.

Ausführungsformen des erfindungsgemäßen Krafteinleitungsmodul des Schwellers weisen in vorteilhafter Weise neben dem geringen Gewicht und der hohen Steifigkeit auch eine hohe spezifische Energieaufnahmefähigkeit auf. Zudem weisen Ausführungsformen des erfindungsgemäßen Krafteinleitungsmoduls auch bei einem Schrägaufprall eine hohe Stabilität sowie ein sehr gutes Aufprallverhalten auf. Basierend auf der Ausgestaltung des Krafteinleitungsmoduls wird die auf die Bodenstruktur wirkende Aufprallenergie optimal absorbiert und insbesondere die Energieaufnahmefähigkeit der Bodenstruktur bei seitlichem Aufprall wesentlich verbessert. Zusätzlich kann durch das kontrollierte Versagen der Bodenstruktur ein gleichmäßiges Lastlevel über den gesamten Deformationsbereich gehalten werden. Das Krafteinleitungsmodul gewährleistet einen vorbestimmten Bewegungsverlauf der Bodenstruktur und verhindert in vorteilhafter Weise ein Wegknicken der Bodenstruktur. Zudem erhöht sich durch das zusätzliche Profil des Krafteinleitungsmoduls am Schweller die Steifigkeit und Belastbarkeit des Schwellers und verbessert somit den Schutz der Insassen im Fahrzeug. Indem das Krafteinleitungsmodul des Schwellers erfindungsgemäß zur Steifigkeit der Tragstruktur des Fahrzeugs beiträgt, können die Anforderungen an die Steifigkeit der übrigen Strukturbauteile verringert werden. Ferner beschränkt sich die Montage des Krafteinleitungsmoduls lediglich darauf einen modifizierten Schweller mit einem integrierten oder separaten Krafteinleitungsmodul an die Tragstruktur des Fahrzeugs anzubinden, wodurch ein zusätzlicher kostenintensiver Arbeits- und Materialaufwand eingespart wird. Dadurch kann in vorteilhafter Weise ein extrem leichtes Bauteil entstehen, welches somit ganz im Sinne eines Leichtbaugedankens konzipierbar ist. Des Weiteren kann auch das Gesamtgewicht der Karosserie verringert werden, wodurch in vorteilhafter Weise der Energiebedarf zum Betreiben des Fahrzeugs sinkt.

Hierbei verformt und/oder schwächt das Krafteinleitungsmodul im Crashfall die Bodenstruktur. Durch die erfindungsgemäße Anordnung des Schwellers an der Bodenstruktur des Fahrzeugs kann das Crashverhalten der Bodenstruktur über das Krafteinleitungsmodul gesteuert und sichergestellt werden, dass es zu einem Verformen der Bodenstruktur an der gewünschten Stelle kommt. Dadurch verformt sich die Bodenstruktur im Crashfall auf kontrollierte Art und Weise, wodurch ein reproduzierbares Verhalten der Bodenstruktur sichergestellt ist. Zweckmäßigerweise wird im Kontaktbereich der Bodenstruktur mit dem Schweller bzw. im Bereich des Krafteinleitungsmoduls ein kontrolliertes Versagen der Bodenstruktur eingeleitet. Hierdurch wird ein Absorbieren bzw. Verzehren der Aufprallenergie durch Verformungsarbeit und/oder Schwächungsarbeit der Bodengruppe am Krafteinleitungsmodul erreicht. Die einwirkende Aufprallenergie kann zudem gezielt durch die Biegesteifigkeit der Bodenstruktur und die konstruktive Ausgestaltung des Krafteinleitungsmoduls beeinflusst werden. Dadurch kann die restliche Tragstruktur des Fahrzeugs in vorteilhafter Weise entlastet werden. Des Weiteren kann durch die beschriebenen Maßnahmen ein Versagen der Bodenstruktur an einer anderen Stelle vermieden werden, welche den Insassen des Fahrzeugs schaden kann.

Zudem umfasst die Verformung ein Umbiegen eines Randbereiches der Bodenstruktur. Das hat den Vorteil, dass eine kontrollierte Verformung der Bodenstruktur bei einem Seitenaufprall auf besonders einfache Weise erreicht werden kann. Hierdurch wird das Deformationsverhalten der Bodenstruktur im Sinne einer hohen Energieabsorption gezielt genutzt bzw. beeinflusst. Zusätzlich kann durch das Umbiegen bzw. Umstülpen ein gleichmäßiges Lastlevel über den gesamten Deformationsweg gehalten werden.

Des Weiteren wird vorgeschlagen, dass die Schwächung ein Abtrennen von an der Bodenstruktur vorgesehenen Verstärkungsrippen umfasst. Um bei einem Seitenaufprall die hohe Aufprallenergie im Wesentlichen vollständig auf kurzem Weg absorbieren zu können, ist das Krafteinleitungsmodul in vorteilhafter Weise derart ausgestaltet, dass es im Crashfall auf seinem Intrusionsweg in die Bodenstruktur die Aufprallenergie in die Bodenstruktur weiterleiten kann, indem es den sandwichartigen Aufbau der Bodenstruktur aufreißt. Auch bei zunehmendem Fortschritt der Intrusion in die Bodenstruktur fällt dabei das Kraftlevel im Gegensatz zu aktuellen Lösungen nicht ab, wodurch die hohe Aufprallenergie immer schneller verzehrt bzw. abgebaut wird. Besonders vorteilhaft ist die gute Steuerbarkeit der Aufprallenergie durch die Geometrie des Krafteinleitungsmoduls und die Biegesteifigkeit der Bodenstruktur. Die feste Anbindung der Verstärkungsrippen an die Bodenstruktur ist für den der Intrusion des Krafteinleitungsmoduls entgegenwirkenden Widerstand entscheidend.

Erfindungsgemäß ist vorgesehen, dass das Krafteinleitungsmodul eine Verformungseinheit umfasst, welche im Crashfall die Bodenstruktur unter Umbiegen zumindest teilweise aufnimmt. Das hat den Vorteil, dass die Bodenstruktur im Bereich des Krafteinleitungsmoduls sicher gehalten wird, indem diese eine kontinuierliche Abstützung bzw. Auflage im Krafteinleitungsmodul erfährt, wodurch der Materialaufwand, um die gesamte Last aufzunehmen, geringer ausgelegt werden kann. In vorteilhafter Weise gewährleistet ein mit der Bodenstruktur verbundenes Krafteinleitungsmodul eine verbesserte Krafteinleitung in die Bodenstruktur. Zudem wird im Crashfall die Bodenstruktur gezielt in einem vorbestimmten Kurvenverlauf in die Verformungseinheit des Krafteinleitungsmoduls geführt, so dass die Bodenstruktur die weitergeleitete Aufprallenergie möglichst großflächig aufnehmen kann. Das bedeutet, dass die Bodenstruktur bei einem Aufprall bzw. Crash nach dem Eindringen innerhalb des Krafteinleitungsmoduls durch einen Formschluss gehalten wird, wodurch die Bodenstruktur auch nach dem Crash belastbar bleibt. Bei der Verwendung von Thermoplasten kann es auf Grund der hohen Reibung zwischen der Bodenstruktur und dem Krafteinleitungsmodul in vorteilhafter Weise zu einem lokalen Aufschmelzen kommen, wodurch nach dem Crash sofort eine Verbindung zwischen dem Krafteinleitungsmodul und der Bodenstruktur vorhanden ist.

Des Weiteren umfasst das Krafteinleitungsmodul eine der Verformungseinheit vorangestellte Schneideinheit, welche im Crashfall die Verstärkungsrippen der Bodenstruktur zumindest, teilweise abtrennt. In vorteilhafter Weise gewährleistet die vorangestellte Schneideinheit des Krafteinleitungsmoduls einen vorbestimmten Schnittverlauf durch die Verstärkungsrippen der Bodenstruktur. Dadurch werden die Verstärkungsrippen und die Bodenstruktur entsprechend der Aufprallenergie und dem Intrusionsverlauf definiert voneinander getrennt. In vorteilhafter Weise kann eine gesteuerte Einleitung von Kräften in die Bodenstruktur und eine gezielte Verteilung der auftretenden Aufprallenergie in das Fahrzeug erfolgen. Dadurch kann in vorteilhafter Weise eine weitere Verbesserung der Krafteinleitung in die

Bodenstruktur des Fahrzeugs erreicht werden. Insbesondere kann durch das vorherige Abtrennen der Verstärkungsrippen ein problemloses Umbiegen der Bodenstruktur ermöglicht werden. Zusätzlich wird die Bodenstruktur durch den Abtrennvorgang in dem Krafteinleitungsmodul geführt, wodurch ein Ausweichen der Bodenstruktur verhindert und damit eine hohe Reproduzierbarkeit der Energieabsorption sichergestellt werden können.

In weiterer vorteilhafter Ausgestaltung der erfindungsgemäßen Anordnung kann die Bodenstruktur zumindest teilweise aus einem Faserverbundwerkstoff hergestellt werden. Der Schweller kann zumindest teilweise aus einem metallischen Werkstoff hergestellt werden. Die aus einem Faserverbundwerkstoff hergestellte Bodenstruktur ermöglicht in vorteilhafter Weise aufgrund der sehr hohen Festigkeit des Werkstoffs eine hohe Crashsicherheit für die Fahrgastzelle des Fahrzeugs und damit einen hohen Schutz der Insassen. Des Weiteren ergeben sich gegenüber der Verwendung von anderen Werkstoffen verhältnismäßig geringe Werkzeugkosten und ein geringeres Gewicht. Häufig ist jedoch bei der Verwendung von Faserverbundwerkstoffen für derartige Bauteile die Tatsache problematisch, dass dieses Material bei Überbelastung, wie beispielsweise im Crashfall, nach einer geringen Verformung spröde versagt. Dieses Verhalten kann nicht nur zu einer verhältnismäßig großen Beschädigung des Fahrzeugs führen, sondern auch eine Verletzungsgefahr für Fahrzeuginsassen darstellen. In vorteilhafter Weise umgeht die erfindungsgemäße Anordnung die vorgenannten Nachteile, indem die intrusionsgefährdeten Bauteile, wie beispielsweise der Schweller, in vorteilhafter Weise aus einem metallischem Werkstoff mit hoher Steifigkeit hergestellt werden, da dieser auf Grund seiner Duktilität eine zuverlässige Lasteinleitung im Crashfall bietet und keinen Sprödbruch aufweist. Insbesondere die Bodenstruktur wird zumindest teilweise mit Verstärkungsrippen verstärkt, welche bevorzugt aus einem Faserverbundwerkstoff bestehen, wodurch sich gegenüber der Verwendung einer nur aus einem metallischen Werkstoff hergestellten Bodenstruktur erhebliche Gewichtseinsparungen ergeben. Ausführungsformen der vorliegenden Erfindung kombinieren in vorteilhafter Weise die positiven Eigenschaften von zwei verschiedenen Werkstoffen miteinander, wodurch ein leichtes und dennoch sicheres, hochbelastbares Bauteil entsteht. Eine derart gestaltete Bodenstruktur ist somit ganz im Sinne eines Leichtbaugedankens konzipierbar.

In weiterer vorteilhafter Ausgestaltung der erfindungsgemäßen Anordnung absorbiert die Bodenstruktur im Crashfall die über das Krafteinleitungsmodul eingeleitete Aufprallenergie durch Deformation und/oder Schwächung, wobei die Energieaufnahmefähigkeit der Bodenstruktur durch deren Biegesteifigkeit und den über das Krafteinleitungsmodul erzeugten Biegeradius der Bodenstruktur gesteuert werden kann. In vorteilhafter Weise findet über die Schneideinheit des Krafteinleitungsmoduls zu Beginn der Intrusion eine konzentrierte Einleitung der Aufprallenergie in die Bodenstruktur statt, welche gezielt durch eine in der Verformungseinheit vollzogene nachfolgende definierte Umlenkung bzw. vorbestimmte Deformation der Bodenstruktur ergänzt werden kann. Da die Bodenstruktur sowohl der Schneideinheit als auch der Kontur der Verformungseinheit des Krafteinleitungsmoduls zwangsweise folgen muss und nicht ausweichen kann, kann mit der Schwächung sowie mit der zunehmenden Umlenkung bzw. Deformation der Bodenstruktur immer mehr Aufprallenergie absorbiert werden. Durch diese gesteuerte Schwächung und/oder Deformation der Bodenstruktur und der damit erfolgten gezielten Krafteinleitung in die Bodenstruktur kann eine unkontrollierte Zerstörung der Bodenstruktur in vorteilhafter Weise verhindert werden. Ein weiterer Vorteil der erfindungsgemäßen Anordnung besteht darin, dass eine zwischen zwei Schwellern durchgehende Bodenstruktur geschaffen werden kann, welche die eingeleitete Aufprallenergie auf die gesamte Tragstruktur der Karosserie verteilt. Dadurch kann das Verhalten der Bodenstruktur im Sinne einer hohen Energieabsorption gezielt beeinflusst werden. Somit weist die Bodenstruktur ein gleichmäßiges Lastlevel über den gesamten Deformationsweg auf. In vorteilhafter Weise erhöht das Krafteinleitungsmodul insbesondere die Crashsicherheit der Karosseriestruktur, so dass die Fahrzeuginsassen insbesondere im Falle eines Seitenaufpralls besser geschützt sind. Im Ergebnis lässt sich somit ein verbesserter Insassenschutz des Fahrzeugs dadurch realisieren, dass das Krafteinleitungsmodul insbesondere im Falle eines Seitencrashs besser zur Verzehrung bzw. zur Weiterleitung von Aufprallenergie insbesondere unter Umgehung der Fahrtgastzelle in die Bodenstruktur herangezogen werden kann.

Bevorzugt ist das Krafteinleitungsmodul als separates Bauteil ausgeführt oder in den Schweller integriert. Das hat den Vorteil, dass sowohl konventionelle Schweller nachgerüstet werden können und somit Krafteinleitungsmodule in eine neue Serienfertigung integriert werden können, als auch bauraumsparende neu konzipierte Schweller einsetzbar sind.

Vorteilhafte Ausführungsformen der Erfindung sind in der Zeichnung dargestellt und werden nachfolgend beschrieben.

Dabei zeigen:
- Fig. 1: eine schematische Schnittdarstellung eines Ausführungsbeispiel einer erfindungsgemäßen Anordnung eines Schwellers an einer Bodenstruktur eines Fahrzeugs, welcher sich im Crashfall zur Aufnahme von Aufprallenergie über ein Krafteinleitungsmodul an der Bodenstruktur abstützt, welches die Aufprallenergie gezielt in die Bodenstruktur einleitet,
- Fig. 2: eine schematische Schnittdarstellung der Anordnung des Schwellers aus Fig. 1 nach einem Aufprall mit einer Verformung und einer teilweisen Zerstörung eines Randbereiches der Bodenstruktur,
- Fig. 3: eine schematische Schnittdarstellung eines ersten Ausführungsbeispiels eines Schwellers, wobei der Schweller als einteiliges Strangpressprofil mit Versteifungsstreben und integriertem Krafteinleitungsmodul ausgeführt ist,
- Fig. 4: eine schematische Schnittdarstellung eines zweiten Ausführungsbeispiels des Schwellers, wobei der Schweller in Blechschalenbauweise ausgeführt ist, in welche das Krafteinleitungsmodul integriert ist, und
- Fig. 5: eine schematische Schnittdarstellung eines dritten Ausführungsbeispiels des Schwellers, wobei der Schweller in einer alternativen Blechschalenbauweise ausgeführt ist, in welche das Krafteinleitungsmodul integriert ist.

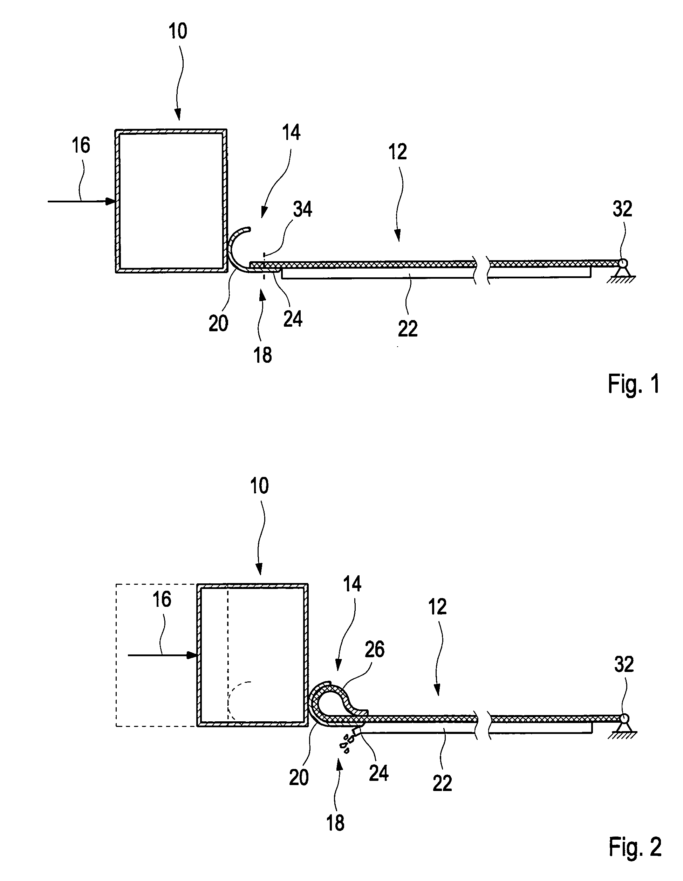

Fig. 1 und 2 zeigen eine Anordnung eines Schwellers 10 an einer Bodenstruktur 12 eines Fahrzeugs, welcher sich im Crashfall zur Aufnahme von Aufprallenergie 16 an der Bodenstruktur 12 abstützt. Dabei ist die Bodenstruktur 12 des Fahrzeugs vorzugsweise als großflächige Bodenplatte zwischen dem Schweller 10 und einem weiteren hier nicht dargestellten Schweller angeordnet, wobei sich die Bodenplatte an einem Längsträger 32 des Fahrzeugs abstützt. Der Schweller 10 und die Bodenstruktur 12 gehen in einen nicht dargestellten Vorbau und eine nicht dargestellte heckseitige Tragstruktur der Karosserie des Fahrzeugs über.

Um die Steifigkeit der Fahrzeugkarosserie zu erhöhen, besteht die Bodenstruktur 12 im vorliegenden Ausführungsbeispiel zumindest teilweise aus einem Faserverbundwerkstoff. Hierbei handelt es sich vorzugsweise um mehrschichtig angeordnetes Laminat. Zusätzlich weist die Bodenstruktur 12 an einer einem Unterboden des Fahrzeugs zugewandten Seite vorzugsweise in Fahrzeugquerrichtung verlaufende Verstärkungsrippen 22 auf. Der Schweller 10 besteht in vorteilhafter Weise zumindest teilweise aus einem metallischen Werkstoff, welcher eine hohe Steifigkeit aufweist, da solche Werkstoffe auf Grund ihrer Duktilität im Crashfall eine zuverlässige Energieabsorption bieten und keinen Sprödbruch aufweisen.

Um eine Anordnung eines Schwellers 10 an einer Bodenstruktur 12 eines Fahrzeugs zu schaffen, welche bei einfachem und kostengünstigem Aufbau eine Verbesserung des Seitenaufprallschutzes des Fahrzeugs gewährleistet, wird erfindungsgemäß vorgeschlagen, dass der Schweller 10 über ein Krafteinleitungsmodul 14 mit der Bodenstruktur 12 in Wirkverbindung steht, welches die Aufprallenergie 16 gezielt in der Bodenstruktur 12 abbaut. Das Krafteinleitungsmodul 14 ist über eine Verbindung 34 mit der Bodenstruktur 12 verbunden. Als Verbindungstechniken für die zumindest teilweise aus einem Faserverbundwerkstoff bestehende Bodenstruktur 12 und das Krafteinleitungsmodul 14 können einfache, vorzugsweise großflächige und somit zuverlässige Verbindungstechniken eingesetzt werden, wie beispielsweise Schraub-, Kleb- oder Nietverbindungen beziehungsweise eine Kombination aus verschiedenen Verbindungstechniken.

In vorteilhafter Weise ist das Krafteinleitungsmodul 14 derart ausgeführt, dass dieses die Bodenstruktur 12 im Crashfall verformt und/oder schwächt. Im Crashfall absorbiert die Bodenstruktur 12 die über das Krafteinleitungsmodul 14 eingeleitete Aufprallenergie 16 durch Deformation und/oder Schwächung, wobei die Energieaufnahmefähigkeit der Bodenstruktur 12 vorzugsweise durch deren Biegesteifigkeit und den über das Krafteinleitungsmodul 14 erzeugten Biegeradius 26 der Bodenstruktur 12 gesteuert wird.

Vorzugsweise umfasst die Verformung ein Umbiegen eines Randbereiches 18 der Bodenstruktur 12. Hierzu weist das Krafteinleitungsmodul 14 eine Verformungseinheit 20 auf, welche im Crashfall die Bodenstruktur 12 unter Umbiegen zumindest teilweise aufnimmt und deren Kontur vorzugsweise halbkreisförmig ausgebildet ist. Wird die Bodenstruktur 12 im Crashfall durch Aufprallenergie 16 in die Verformungseinheit 20 des Krafteinleitungsmodul 14 gedrückt, so wird der Randbereich 18 der Bodenstruktur 12 durch Umbiegen verformt. Hierdurch werden insbesondere Belastungsspitzen der Aufprallenergie 16 absorbiert. Damit können in baulich einfacher und kostengünstiger Weise vom Schweller 10 ausgehende Aufprallkräfte 16 über das Krafteinleitungsmodul 14 kontrolliert an die Bodenstruktur 12 des Fahrzeugs weitergeleitet werden.

Zusätzlich umfasst die Schwächung in vorteilhafter Weise ein Abtrennen der an der Bodenstruktur 12 vorgesehenen Verstärkungsrippen 22. Hierzu weist das Krafteinleitungsmodul 14 eine der Verformungseinheit 20 vorangestellte Schneideinheit 24 auf, die im Crashfall die Verstärkungsrippen 22 der Bodenstruktur 12 zumindest teilweise abtrennt und somit nicht nur die Bodenstruktur 12 während des Intrusionsvorgangs schwächt, sondern auch das nachfolgende Umbiegen der steifen Bodenstruktur 12 in der Verformungseinheit 20 des Krafteinleitungsmoduls 14 ermöglicht bzw. erleichtert.

Bei einem Aufprall bzw. Crash wird die Bodenstruktur 12 unter Lösen der Verbindung 34 in das Krafteinleitungsmodul 14 geschoben und dort durch einen Formschluss gehalten, wodurch die Bodenstruktur 12 auch nach dem Crash belastbar bleibt. Bei der Verwendung von Thermoplasten kann es auf Grund der hohen Reibung zwischen der Bodenstruktur 12 und dem Krafteinleitungsmodul 14 in vorteilhafter Weise zu einem lokalen Aufschmelzen kommen, wodurch nach dem Crash sofort wieder eine Verbindung zwischen dem Krafteinleitungsmodul 14 und der Bodenstruktur 12 vorhanden ist.

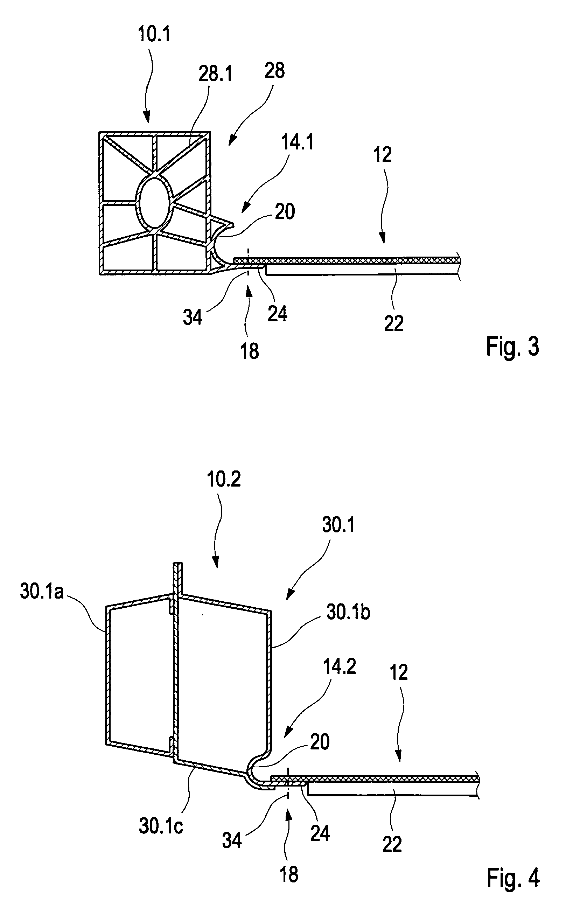

Das mit der Bodenstruktur 12 verbundene Krafteinleitungsmodul 14 kann gemäß Fig. 1 und 2 als separates Bauteil 14 oder gemäß Fig. 3 bis 5 als in den Schweller 10.1, 10.2, 10.3 integriertes Bauteil 14.1, 14.2, 14.3 ausgeführt sein. Das gemäß Fig. 3, 4 und 5 in den Schweller 10.1, 10.2, 10.3 integrierte und somit einteilig mit dem Schweller 10.1, 10.2, 10.3 ausgebildete Krafteinleitungsmodul 14.1, 14.2, 14.3 ist durch die homogene Verbindung mit dem Schweller 10.1, 10.2, 10.3 besonders belastbar und kostengünstig herstellbar.

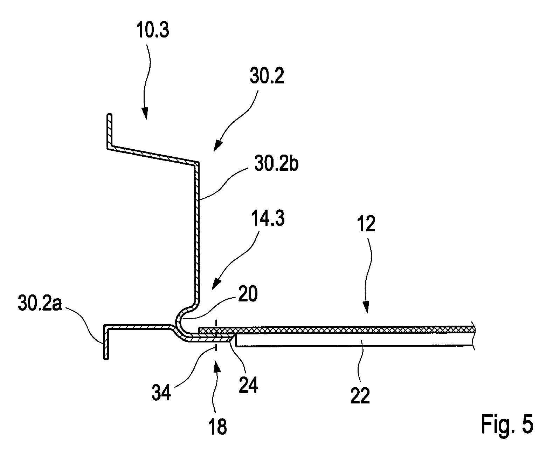

Fig. 3 zeigt eines ersten Ausführungsbeispiels eines in einen Schweller 10.1 integrierten Krafteinleitungsmoduls 14.1, bei welchem der Schweller 10.1 als einteiliges Strangpressprofil 28 mit Versteifungsstreben 28.1 ausgeführt ist, wobei das Krafteinleitungsmodul 14.1 in das Strangpressprofil 28 integriert ist. Fig. 4 und 5 zeigen zwei weitere Ausführungsbeispiele von in Schweller 10.2, 10.3 integrierte Krafteinleitungsmodule 14.2, 14.3, bei welchen die Schweller 10.2, 10.3 in Blechschalenbauweise 30.1, 30.2 hergestellt sind und die Blechschalen 30.1 a, 30.1 b, 30.1 c, 30.2a, 30.2b fügetechnisch miteinander verbunden sind, wobei die Krafteinleitungsmodule 14.2, 14.3 in jeweils zumindest eine Blechschale 30.1 b, 30.1 c, 30.2a, 30.2b integriert bzw. angeformt sind.

### BEZUGSZEICHENLISTE

- 10, 10.1, 10.2, 10.3: Schweller
- 12: Bodenstruktur
- 14, 14.1, 14.2, 14.3: Krafteinleitungsmodul
- 16: Aufprallenergie
- 18: Randbereich
- 20: Verformungseinheit
- 22: Verstärkungsrippen
- 24: Schneideinheit
- 26: Biegeradius
- 28: Strangpressprofil
- 28.1: Versteifungsstrebe
- 30.1, 30.2: Blechschalenbauweise
- 30.1a, 30.1 b,: 30.1c Blechschale
- 30.2a, 30.2b: Blechschale
- 32: Längsträger
- 34: Verbindung

## Patentansprüche

1. Anordnung einer Bodenstruktur eines Fahrzeuges und eines Schwellers welcher sich im Crashfall zur Aufnahme von Aufprallenergie (16) an der Bodenstruktur (12) abstützt, wobei der Schweller (10) über ein Krafteinleitungsmodul (14) mit der Bodenstruktur (12) in Wirkverbindung steht, welches die Aufprallenergie (16) gezielt in der Bodenstruktur (12) abbaut, wobei das Krafteinleitungsmodul (14) die Bodenstruktur (12) im Crashfall verformt und/oder schwächt, **dadurch gekennzeichnet, dass** das Krafteinleitungsmodul (14) eine Verformungseinheit (20), welche im Crashfall die Bodenstruktur (12) unter Umbiegen zumindest teilweise aufnimmt, und eine der Verformungseinheit (20) vorangestellte Schneideinheit (24) umfasst, welche im Crashfall an der Bodenstruktur (12) angeordnete Verstärkungsrippen (22) zumindest teilweise abtrennt.

2. Anordnung nach Anspruch 1, **dadurch gekennzeichnet, dass** die Bodenstruktur (12) zumindest teilweise aus einem Faserverbundwerkstoff und/oder der Schweller (10) zumindest teilweise aus einem metallischen Werkstoff besteht.

3. Anordnung nach Anspruch 1 oder 2, **dadurch gekennzeichnet, dass** die Bodenstruktur (12) im Crashfall die über das Krafteinleitungsmodul (14) eingeleitete Aufprallenergie (16) durch die Deformation und/oder die Schwächung absorbiert, wobei die Energieaufnahmefähigkeit der Bodenstruktur (12) durch deren Biegesteifigkeit und den über das Krafteinleitungsmodul (14) erzeugten Biegeradius (26) der Bodenstruktur (12) gesteuert ist.

4. Anordnung nach einem der Ansprüche 1 bis 3, **dadurch gekennzeichnet, dass** das Krafteinleitungsmodul (14, 14.1, 14.2, 14.3) als separates Bauteil ausgeführt ist.

5. Anordnung nach einem der Ansprüche 1 bis 4, **dadurch gekennzeichnet, dass** das Krafteinleitungsmodul (14, 14.1, 14.2, 14.3) in den Schweller (10, 10.1, 10.2, 10.3) integriert ist.

## Claims

1. Arrangement of a floor structure of a vehicle and a sill which is supported on the floor structure to receive impact energy (16) in the event of a crash, wherein the sill (10) is operatively connected to the floor structure (12) via a force transmission module (14) which dissipates the impact energy (16) in the floor structure (12) in a targeted manner, wherein the force transmission module (14) deforms and/or weakens the floor structure (12) in the event of a crash, **characterised in that** the force transmission module (14) comprises a deformation unit (20) which at least partially receives the floor structure (12) by bending in the event of a crash, and a cutting unit (24) preceding the deformation unit (20), said cutting unit at least partially separating reinforcing ribs (22) arranged on the floor structure (12) in the event of a crash.

2. Arrangement according to claim 1, **characterised in that** the floor structure (12) at least partially consists of a fibre composite material and/or the sill (10) at least partially consists of a metallic material.

3. Arrangement according to claim 1 or 2, **characterised in that**, in the event of a crash, the floor structure (12) absorbs the impact energy (16) transmitted via the force transmission module (14) by deformation and/or weakening, wherein the energy absorption capability of the floor structure (12) is controlled by the bending stiffness thereof and the bending radius (26) of the floor structure (12) generated via the force transmission module (14).

4. Arrangement according to one of claims 1 to 3, **characterised in that** the force transmission module (14, 14.1, 14.2, 14.3) is executed as a separate component.

5. Arrangement according to one of claims 1 to 4, **characterised in that** the force transmission module (14, 14.1, 14.2, 14.3) is integrated into the sill (10, 10.1, 10.2, 10.3).

## Revendications

1. Agencement d'une structure de plancher d'un véhicule et d'un longeron de bas de caisse qui s'appuie en cas d'accident contre la structure de plancher (12) pour absorber l'énergie d'impact (16), le longeron (10) étant en liaison active avec la structure de plancher (12) par l'intermédiaire d'un module de transfert de force (14) qui réduit l'énergie d'impact (16) de manière ciblée dans la structure de plancher (12), le module de transfert de force (14) déformant et/ou affaiblissant la structure de plancher (12) en cas d'accident, **caractérisé en ce que** le module de transfert de force (14) comprend une unité de déformation (20), qui reçoit en cas d'accident au moins en partie la structure de plancher (12) en se pliant, et une unité de coupe (24), qui est placée en avant de l'unité de déformation (20) et qui coupe en cas d'accident au moins en partie des nervures de renfort (22) agencées sur la structure de plancher (12).

2. Agencement selon la revendication 1, **caractérisé en ce que** la structure de plancher (12) est constituée au moins en partie d'un matériau composite renforcé par des fibres et/ou le longeron (10) est constitué au moins en partie d'un matériau métallique.

3. Agencement selon la revendication 1 ou 2, **caractérisé en ce que** la structure de plancher (12) absorbe en cas d'accident l'énergie d'impact (16) introduite par l'intermédiaire du module de transfert de force (14) grâce à la déformation et/ou à l'affaiblissement, la capacité d'absorption d'énergie de la structure de plancher (12) étant donnée par sa rigidité en flexion et par le rayon de courbure (26), produit par l'intermédiaire du module de transfert de force (14), de la structure de plancher (12).

4. Agencement selon l'une des revendications 1 à 3, **caractérisé en ce que** le module de transfert de force (14, 14.1, 14.2, 14.3) est réalisé comme un élément séparé.

5. Agencement selon l'une des revendications 1 à 4, **caractérisé en ce que** le module de transfert de force (14, 14.1, 14.2, 14.3) est intégré dans le longeron (10, 10.1, 10.2, 10.3).
